# EUROPEAN PATENT APPLICATION

(11) **EP 4 507 038 A1**
(43) Date of publication of application: **12.02.2025**
(21) Application number: 23815775.4
(22) Date of filing: 16.05.2023
(51) Int. Cl.: H01M 4/62, H01M 4/13, H01M 10/052, H01M 10/0566

(54) **ELECTRODE FOR LITHIUM ION BATTERIES, AND LITHIUM ION BATTERY**

(30) Priority: 01.06.2022 JP 2022089633
(71) Applicant: Sumitomo Seika Chemicals Co., Ltd., Kako-gun, Hyogo 675-0145 (JP)
(72) Inventor: KONO, Yuki, Kako-gun, Hyogo 675-0145 (JP); UENO, Kyoka, Kako-gun, Hyogo 675-0145 (JP)
(74) Representative: Vossius & Partner Patentanwälte Rechtsanwälte mbB
(86) International application number: PCT/JP2023/018339
(87) International publication number: WO 2023/234016

(57) **Abstract**

An electrode for lithium ion batteries, containing a sulfonic acid compound which contains a sulfonate anion represented by the following Formula (1) and a Ni cation,

R-SO₃⁻ (1),

in the Formula (1), R represents an alkyl group having 1 to 5 carbon atoms, which may be substituted with a fluorine atom, an alkenyl group having 2 to 5 carbon atoms, which may be substituted with a fluorine atom, an alkynyl group having 2 to 5 carbon atoms, which may be substituted with a fluorine atom, or an aryl group which may be substituted with a fluorine atom,
in which the electrode contains a positive electrode active material layer, and the positive electrode active material layer contains, as a positive electrode active material, Li_{z}Ni_{(1-x-y)}CoₓM_{y}O₂, in which 0 ≤ x ≤ 0.40, 0 ≤ y ≤ 0.40, 0.90 ≤ z ≤ 1.20, and M is at least one element selected from the group consisting of Mn, V, Mg, Mo, Nb, and Al.

## Description

### Technical Field

The present disclosure relates to an electrode for lithium ion batteries, and a lithium ion battery.

### Background Art

In a lithium ion battery, when charge and discharge are repeated, lithium loss occurs due to decomposition of an electrolyte solution on a surface of an electrode, resulting in a tendency for battery capacity to decrease. Therefore, as a method for preventing the decomposition of the electrolyte solution on the surface of the electrode, a method of forming a coating film on the surface of the electrode has been studied. For example, Patent Literature 1 discloses that, in order to improve cycle characteristics and storage characteristics, a specific lithium sulfonate is added to a negative electrode slurry to be dispersed, and the slurry is applied and dried so that the lithium sulfonate is adhered to a surface of a negative electrode active material. In addition, Patent Literature 2 discloses a battery using a non-aqueous electrolyte solution containing LiPF₆ and lithium bis(fluorosulfonyl)imide (LiFSI) as electrolytes, and lithium trifluoromethanesulfonate as an additive, to reduce battery resistance after storage.

### Citation List

### Patent Literature

Patent Literature 1: International Publication No. WO2014/119375
Patent Literature 2: International Publication No. WO2020/026853

### Summary of Invention

### Technical Problem

The present disclosure relates to an electrode for lithium ion batteries, which is capable of maintaining a high capacity when the lithium ion battery undergoes repeated charge and discharge at a high temperature.

### Solution to Problem

One aspect of the present disclosure relates to an electrode for lithium ion batteries, the electrode containing a sulfonic acid compound which contains a sulfonate anion represented by the following Formula (1) and a Ni cation.

R-SO₃⁻ (1)

In the Formula (1), R represents an alkyl group having 1 to 5 carbon atoms, which may be substituted with a fluorine atom, an alkenyl group having 2 to 5 carbon atoms, which may be substituted with a fluorine atom, an alkynyl group having 2 to 5 carbon atoms, which may be substituted with a fluorine atom, or an aryl group which may be substituted with a fluorine atom.

In one aspect, the above-mentioned electrode contains a positive electrode active material layer, and the positive electrode active material layer contains, as a positive electrode active material, Li_{z}Ni_{(1-x-y)}CoₓM_{y}O₂, in which 0 ≤ x ≤ 0.40, 0 ≤ y ≤ 0.40, 0.90 ≤ z ≤ 1.20, and M is at least one element selected from the group consisting of Mn, V, Mg, Mo, Nb, and Al.

In another aspect, the above-mentioned electrode is used as a negative electrode of a lithium ion battery which contains a positive electrode and the negative electrode arranged opposite to each other, and an electrolyte solution, and the positive electrode contains a positive electrode active material layer, and the positive electrode active material layer contains, as a positive electrode active material, Li_{z}Ni_{(1-x-y)}CoₓM_{y}O₂, in which 0 ≤ x ≤ 0.40, 0 ≤ y ≤ 0.40, 0.90 ≤ z ≤ 1.20, and M is at least one element selected from the group consisting of Mn, V, Mg, Mo, Nb, and Al.

Another aspect of the present disclosure relates to a lithium ion battery containing a positive electrode and the negative electrode arranged opposite to each other, and an electrolyte solution, in which at least one of the positive electrode or the negative electrode contains a sulfonic acid compound containing a sulfonate anion represented by the following Formula (1) and a Ni cation.

R-SO₃⁻ (1)

In the Formula (1), R represents an alkyl group having 1 to 5 carbon atoms, which may be substituted with a fluorine atom, an alkenyl group having 2 to 5 carbon atoms, which may be substituted with a fluorine atom, an alkynyl group having 2 to 5 carbon atoms, which may be substituted with a fluorine atom, or an aryl group which may be substituted with a fluorine atom.

In the above-mentioned lithium ion battery, the positive electrode contains a positive electrode active material layer, and the positive electrode active material layer contains, as a positive electrode active material, Li_{z}Ni_{(1-x-y)}CoₓM_{y}O₂, in which 0 ≤ x ≤ 0.40, 0 ≤ y ≤ 0.40, 0.90 ≤ z ≤ 1.20, and M is at least one element selected from the group consisting of Mn, V, Mg, Mo, Nb, and Al.

### Advantageous Effects of Invention

According to the aspect of the present disclosure, there is provided an electrode for lithium ion batteries, which is capable of maintaining a high capacity when the lithium ion battery undergoes repeated charge and discharge at a high temperature.

### Brief Description of Drawings

Fig. 1 is a cross-sectional view showing an example of an electrode for lithium ion batteries.
Fig. 2 is a cross-sectional view showing an example of a lithium ion battery.

### Description of Embodiments

Some embodiments of the present invention will be described in detail. The present invention is not limited to the examples described below.

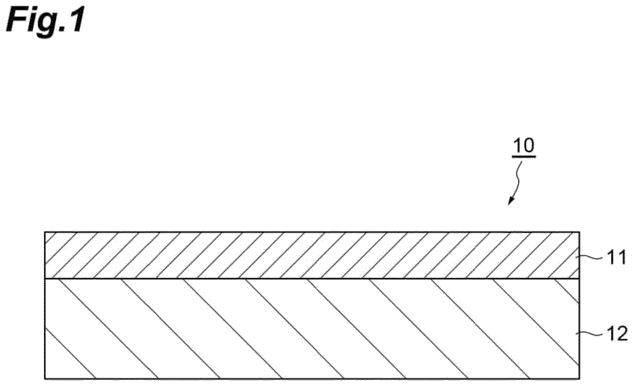

Fig. 1 is a cross-sectional view schematically showing an example of an electrode for lithium ion batteries.

An electrode for lithium ion batteries 10 shown in Fig. 1 contains a current collector 11 and an active material layer 12. As shown in Fig. 1, the active material layer 12 may be provided on one surface of the current collector 11 or on both surfaces of the current collector 11.

As an example of the electrode for lithium ion batteries 10, the electrode contains a sulfonic acid compound containing a sulfonate anion represented by the following Formula (1) and a Ni cation.

R-SO₃⁻ (1)

In the Formula (1), R represents an alkyl group having 1 to 5 carbon atoms, which may be substituted with a fluorine atom, an alkenyl group having 2 to 5 carbon atoms, which may be substituted with a fluorine atom, an alkynyl group having 2 to 5 carbon atoms, which may be substituted with a fluorine atom, or an aryl group which may be substituted with a fluorine atom.

In a case where the electrode for lithium ion batteries 10 contains a sulfonic acid compound containing a sulfonate anion represented by the Formula (1) and a Ni cation, compared to a case of not containing the sulfonic acid compound, decomposition of the electrolyte solution on a surface of the electrode for lithium ion batteries 10 can be suppressed in a lithium ion battery produced using the electrode for lithium ion batteries 10. It is considered that this contributes to suppression of an increase in resistance and maintenance of high capacity when the lithium ion battery is repeatedly charged and discharged.

The alkyl group, alkenyl group, alkynyl group, and aryl group as R may be unsubstituted, or one or more hydrogen atoms therein may be substituted with a fluorine atom.

The number of carbon atoms in the alkyl group having 1 to 5 carbon atoms, which may be substituted with a fluorine atom, is 1, 2, 3, 4, or 5. The alkyl group having 1 to 5 carbon atoms, which may be substituted with a fluorine atom, may be linear or branched. Examples of the alkyl group having 1 to 5 carbon atoms, which may be substituted with a fluorine atom, include a methyl group, an ethyl group, an n-propyl group, an isopropyl group, an n-butyl group, an isobutyl group, a t-butyl group, an n-pentyl group, and a trifluoromethyl group. From the viewpoint of reducing battery resistance, the alkyl group having 1 to 5 carbon atoms, which may be substituted with a fluorine atom, may be a methyl group, an ethyl group, or a t-butyl group. In the case where the alkyl group having 1 to 5 carbon atoms, which may be substituted with a fluorine atom, is a methyl group which may be substituted with a fluorine atom, the battery resistance can be further reduced.

The number of carbon atoms in the alkenyl group having 2 to 5 carbon atoms, which may be substituted with a fluorine atom, is 2, 3, 4, or 5. The alkenyl group having 2 to 5 carbon atoms, which may be substituted with a fluorine atom, may be linear or branched. Examples of the alkenyl group having 2 to 5 carbon atoms, which may be substituted with a fluorine atom, include a vinyl group, an allyl group, an isopropenyl group, a 1-butenyl group, a 2-butenyl group, a 3-butenyl group, an isobutenyl group, and a 1,1-difluoro-1-propenyl group. The alkenyl group having 2 to 5 carbon atoms, which may be substituted with a fluorine atom, may be a vinyl group which may be substituted with a fluorine atom.

The number of carbon atoms in the alkynyl group having 2 to 5 carbon atoms, which may be substituted with a fluorine atom, is 2, 3, 4, or 5. The alkynyl group having 2 to 5 carbon atoms, which may be substituted with a fluorine atom, may be linear or branched. Examples of the alkynyl group having 2 to 5 carbon atoms, which may be substituted with a fluorine atom, include a 1-propynyl group, a 2-propynyl group, a 1-butynyl group, a 2-butynyl group, and a 3-butynyl group. The alkynyl group having 2 to 5 carbon atoms, which may be substituted with a fluorine atom, may be a 2-propynyl group which may be substituted with a fluorine atom.

Examples of the aryl group which may be substituted with a fluorine atom include a phenyl group, a tolyl group, a pentafluorophenyl group, a xylyl group, and a naphthyl group.

The Ni cation may be a divalent, trivalent, or tetravalent Ni cation. From the viewpoint of further suppressing the increase in resistance and the decrease in capacity when the lithium ion battery is repeatedly charged and discharged, the Ni cation may be a divalent Ni cation.

The sulfonic acid compound may be a compound represented by the following Formula (2).

(R-SO₃⁻)₂[Ni]²⁺ (2)

R in the Formula (2) has the same meaning as R in the Formula (1) mentioned above.

Examples of the above-mentioned compound represented by the Formula (2) include nickel(II) methanesulfonate, nickel(II) trifluoromethanesulfonate, nickel(II) ethanesulfonate, nickel(II) propanesulfonate, nickel(II) pentanesulfonate, nickel(II) vinylsulfonate, nickel(II) allylsulfonate, nickel (II) propynylsulfonate, nickel(II) benzenesulfonate, and nickel(II) pentafluorobenzenesulfonate.

The above-mentioned sulfonic acid compound may adhere to the surface of the electrode for lithium ion batteries 10. More specifically, the above-mentioned sulfonic acid compound may adhere to the surface of the active material layer 12.

Examples of a method for causing the sulfonic acid compound to adhere to the surface of the active material layer 12 include a method including a step of impregnating the electrode for lithium ion batteries with a solution containing the above-mentioned sulfonic acid compound. A time for the impregnation may be, for example, less than 48 hours or less than 24 hours, and may be 1 hour or more. In addition, a temperature of the solution for impregnating the electrode may be, for example, room temperature (25°C) to 40°C. The solution containing the sulfonic acid compound may be an electrolyte solution in the lithium ion battery.

In the lithium ion battery, it is known that, during charge and discharge in an initial stage, an electrochemical reaction occurs on the surface of the electrode, forming a coating film called a solid electrolyte interface (SEI) (hereinafter, also referred to as "SEI film") on the surface of the active material layer or the like. The electrode for lithium ion batteries 10 may have the SEI film, and more specifically, may have the SEI film formed on the surface of the active material layer 12. In these cases, the above-mentioned sulfonic acid compound may be contained in the SEI film.

The electrode for lithium ion batteries 10 is an electrode used in the lithium ion battery, and may be either a positive electrode or a negative electrode. In a case where the electrode for lithium ion batteries 10 is a positive electrode for lithium ion batteries, the current collector 11 is a positive electrode current collector and the active material layer 12 is a positive electrode active material layer. On the other hand, in a case where the electrode for lithium ion batteries 10 is a negative electrode for lithium ion batteries, the current collector 11 is a negative electrode current collector and the active material layer 12 is a negative electrode active material layer.

The positive electrode current collector may contain a material having electronic conductivity. Examples of the material having electronic conductivity include conductive substances such as carbon, titanium, chromium, molybdenum, ruthenium, rhodium, tantalum, tungsten, osmium, iridium, platinum, gold, and aluminum; and alloys containing two or more of conductive substances (for example, stainless steel). From the viewpoint of high electronic conductivity, better stability in the electrolyte solution, and better oxidation resistance, the material of the positive electrode current collector may be carbon, aluminum, or stainless steel, and from the viewpoint of cost, the material of the positive electrode current collector may be aluminum.

The positive electrode current collector may be a foil (in a form of a foil). In a case where the positive electrode current collector is a foil, from the viewpoint of further increasing the capacity, the positive electrode current collector may have a primer layer on its surface.

The positive electrode active material layer contains a positive electrode active material. The positive electrode active material may be a lithium-containing composite oxide. Examples of the lithium-containing composite oxide include LiMnO₂, LiFeO₂, LiMn₂O₄, Li₂FeSiO₄, LiNi_{1/3}Co_{1/3}Mn_{1/3}O₂, LiNi_{0.5}Co_{0.2}Mn_{0.3}O₂, LiNi_{0.6}Co_{0.2}Mn_{0.2}O₂, LiNi_{0.8}Co_{0.1}Mn_{0.1}O₂, Li_{z}Ni_{(1-x-y)}CoₓM_{y}O₂, in which 0 ≤ x ≤ 0.40, 0 ≤ y ≤ 0.40, 0.90 ≤ z ≤ 1.20, and M is at least one element selected from the group consisting of Mn, V, Mg, Mo, Nb, and Al, LiFePO₄, and Li_{z}Co₍₁₋ₓ₎MₓO₂, in which 0 ≤ x ≤ 0.1, 0.97 ≤ z ≤ 1.20, and M is at least one element selected from the group consisting of Mn, Ni, V, Mg, Mo, Nb, and Al. From the viewpoint of further increasing the capacity of the battery, the positive electrode active material may be LiNi_{1/3}Co_{1/3}Mn_{1/3}O₂, LiNi_{0.3}Co_{0.2}Mn_{0.3}O₂, LiNi_{0.6}Co_{0.2}Mn_{0.2}O_{2,} LiNi_{0.8}Co_{0.1}Mn_{0.1}O₂, or Li_{z}Ni_{(1-x-y)}CoₓM_{y}O₂, in which 0 ≤ x ≤ 0.40, 0 ≤ y ≤ 0.40, 0.90 ≤ z ≤ 1.20, and M is at least one element selected from the group consisting of Mn, V, Mg, Mo, Nb, and Al.

From the viewpoint of easily maintaining a higher capacity of the lithium ion battery, the positive electrode active material layer may contain, as the positive electrode active material, Li_{z}Ni_{(1-x-y)}CoₓM_{y}O₂, in which 0 ≤ x ≤ 0.40, 0 ≤ y ≤ 0.40, 0.90 ≤ z ≤ 1.20, and M is at least one element selected from the group consisting of Mn, V, Mg, Mo, Nb, and Al.

The negative electrode current collector may contain, for example, metals such as aluminum, copper, nickel, or stainless steel. From the viewpoint of processability and cost, the negative electrode current collector may contain copper. The negative electrode current collector may be a foil (in a form of a foil). A surface of the negative electrode current collector may be roughened.

The negative electrode active material layer contains a negative electrode active material. The negative electrode active material is, for example, a material capable of occluding and releasing lithium. Examples of the negative electrode active material include carbon materials such as graphite and amorphous carbon; and oxide materials such as indium oxide, silicon oxide, tin oxide, lithium titanate, zinc oxide, and lithium oxide. The negative electrode active material may be a lithium metal or a metal material capable of forming an alloy with lithium. Examples of the metal capable of forming an alloy with lithium include Cu, Sn, Si, Co, Mn, Fe, Sb, and Ag. The negative electrode active material may contain an alloy containing these metals and lithium, and containing two or three kinds of metals. These exemplified negative electrode active materials may be used alone, or in combination with two or more thereof.

From the viewpoint of achieving higher energy density, the negative electrode active material may contain a carbon material such as graphite and amorphous carbon, and an Si-based active material selected from Si, Si alloy, Si oxide, and the like. In this case, a ratio of the mass of the Si-based active material to the total mass of the carbon material and the Si-based active material may be 0.5% by mass or more, 1% by mass or more, or 2% by mass or more; and may be 95% by mass or less, 50% by mass or less, or 40% by mass or less. The ratio of the mass of the Si-based active material to the total mass of the carbon material and the Si-based active material may be 0.5% by mass or more and 95% by mass or less, 50% by mass or less, or 40% by mass or less; 1% by mass or more and 95% by mass or less, 50% by mass or less, or 40% by mass or less; or 2% by mass or more and 95% by mass or less, 50% by mass or less, or 40% by mass or less.

The positive electrode active material layer and the negative electrode active material layer may further contain a binder. Examples of the binder include polyvinylidene fluoride (PVDF), a vinylidene fluoride-hexafluoropropylene copolymer, a vinylidene fluoride-tetrafluoroethylene copolymer, a styrene-butadiene copolymerized rubber (SBR), carboxymethyl cellulose (CMC), polytetrafluoroethylene, polypropylene, polyethylene, polyimide, polyamideimide, polyacrylic acid, polyacrylic acid metal salt, polyvinyl alcohol, acrylic acid-polyacrylonitrile, polyacrylamide, polymethacrylic acid, and a copolymer thereof. The positive electrode active material layer and the negative electrode active material layer may contain the same binder or different binders. In a case where the positive electrode active material layer contains a binder, the binder contained in the positive electrode active material layer may be polyvinylidene fluoride (PVDF). In a case where the negative electrode active material layer contains a binder, from the viewpoint of further improving the cycle characteristics, the binder contained in the negative electrode active material layer may be SBR, CMC, polyacrylic acid, or a copolymer containing these substances.

An example of the lithium ion battery contains a positive electrode and a negative electrode arranged opposite to each other, and an electrolyte solution, in which at least one of the positive electrode or the negative electrode contains the above-mentioned sulfonic acid compound. The positive electrode and the negative electrode may be the electrode for lithium ion batteries mentioned above.

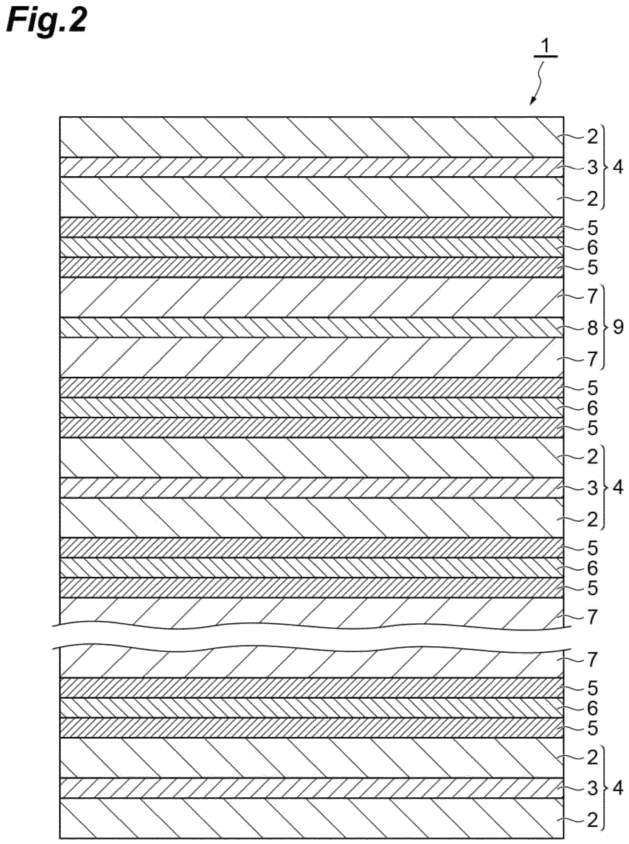

Fig. 2 is a cross-sectional view schematically showing an example of the lithium ion battery. A lithium ion battery 1 shown in Fig. 2 contains a negative electrode 4 and a positive electrode 9 alternately stacked, an electrolyte solution 5 placed between the negative electrode 4 and the positive electrode 9, and a separator 6 provided in the electrolyte solution 5. The lithium ion battery 1 contains 7 layers of the negative electrode 4 and 6 layers of the positive electrode 9, although part of the repeated structure is omitted in Fig. 2. The negative electrode 4 contains a negative electrode current collector 3, and negative electrode active material layers 2 provided on both sides of the negative electrode current collector 3. The positive electrode 9 contains a positive electrode current collector 8, and positive electrode active material layers 7 provided on both sides of the positive electrode current collector 8. The positive electrode 9 is a positive electrode for lithium ion batteries, containing the positive electrode current collector and the positive electrode active material layer mentioned above. On the other hand, the negative electrode 4 is a negative electrode for lithium ion batteries, containing the negative electrode current collector and the negative electrode active material layer mentioned above.

Specifically, the electrolyte solution 5 contains a non-aqueous solvent and an electrolyte. The electrolyte solution 5 may be a non-aqueous electrolyte solution.

From the viewpoint of keeping a viscosity of the electrolyte solution 5 low, the non-aqueous solvent may be an aprotic solvent. The aprotic solvent may be at least one selected from the group consisting of cyclic carbonate, chain carbonate, aliphatic carboxylic acid ester, lactone, lactam, cyclic ether, chain ether, sulfone, nitrile, and halogen derivatives thereof. The aprotic solvent may contain cyclic carbonate or chain carbonate, or may contain a combination of cyclic carbonate and chain carbonate.

Examples of the cyclic carbonate include ethylene carbonate, propylene carbonate, butylene carbonate, and fluoroethylene carbonate. Examples of the chain carbonate include dimethyl carbonate, diethyl carbonate, and ethyl methyl carbonate. Examples of the aliphatic carboxylic acid ester include methyl acetate, ethyl acetate, methyl propionate, ethyl propionate, methyl butyrate, methyl isobutyrate, and methyl trimethylacetate. Examples of the lactone include γ-butyrolactone. Examples of the lactam include ε-caprolactam and N-methylpyrrolidone. Examples of the cyclic ether include tetrahydrofuran, 2-methyltetrahydrofuran, tetrahydropyran, and 1,3-dioxolane. Examples of the chain ether include 1,2-diethoxyethane and ethoxymethoxyethane. Examples of the sulfone include sulfolane. Examples of the nitrile include acetonitrile. Examples of the halogen derivative include 4-fluoro-1,3-dioxolan-2-one, 4-chloro-1,3-dioxolan-2-one, and 4,5-difluoro-1,3-dioxolan-2-one. The non-aqueous solvent may contain one or more compounds selected from these compounds.

A content of the non-aqueous solvent in the electrolyte solution 5 is, for example, 70% to 99% by mass based on the total mass of the electrolyte solution 5.

The electrolyte may be a lithium salt which serves as an ion source of lithium ions. The electrolyte may contain at least one lithium salt (first lithium salt) selected from the group consisting of LiAlCl₄, LiBF₄, LiPF₆, LiClO₄, LiTFSI (lithium bistrifluoromethanesulfonimide), LiFSI (lithium bisfluorosulfonimide), LiAsF₆, and LiSbF₆. The electrolyte may contain LiBF₄, LiPF₆, or a combination thereof from the viewpoints that they have a high degree of dissociation, can enhance the ion conductivity of the electrolyte solution, and has an action of suppressing deterioration of the performance of an electricity storage device by a long-term use due to their oxidation-reduction resistance characteristics.

In a case where the electrolyte is LiBF₄, LiPF₆, or a combination thereof, the non-aqueous solvent may contain cyclic carbonate and chain carbonate. LiBF₄ and/or LiPF₆ may be combined with ethylene carbonate and diethyl carbonate.

A concentration of the electrolyte in the electrolyte solution 5 may be 0.1 mol/L or more and 2.0 mol/L or less based on the total volume of the electrolyte solution 5. In a case where the concentration of the electrolyte based on the total volume of the electrolyte solution 5 is 0.1 mol/L or more, good conductivity of the electrolyte solution 5 is easily obtained, and in a case where the concentration of the electrolyte based on the total volume of the electrolyte solution 5 is 2.0 mol/L or less, the increase in the viscosity of the electrolyte solution 5 is suppressed, and the mobility of ions can be easily secured. From the same viewpoint, the concentration of the electrolyte may be 0.5 mol/L or more, and may be 1.5 mol/L or less, based on the total volume of the electrolyte solution 5.

The electrolyte solution 5 may contain the above-mentioned lithium salt (first lithium salt), and one or more second lithium salts different from the first lithium salt. Examples of the second lithium salt include lithium difluorophosphate; lithium bis(oxalato)borate (LiBOB); lithium tetrafluoro(oxalato)phosphate (LiTFOP); lithium difluorooxalatoborate (LiDFOB); lithium difluorobisoxalatophosphate (LiDFOP); lithium tetrafluoroborate; lithium bisfluorosulfonylimide; lithium tetrafluoro(oxalato)phosphate; lithium salts having a phosphate skeleton such as Li₂PO₃F; and lithium salts having an S(=O) group, such as lithium trifluoro((methanesulfonyl)oxy)borate, lithium pentafluoro((methanesulfonyl)oxy)phosphate, lithium methylsulfate, lithium ethylsulfate, lithium 2,2,2-trifluoroethylsulfate, and lithium fluorosulfonate. The second lithium salt may contain one or more lithium salts selected from the group consisting of lithium difluorophosphate, lithium bisoxalatoborate, lithium tetrafluoro(oxalato)phosphate, lithium difluorooxalatoborate, lithium difluorobisoxalatophosphate, lithium methyl sulfate, lithium ethyl sulfate, and lithium fluorosulfonate.

A concentration of the second lithium salt in the electrolyte solution 5 may be 1.0 mol/L or less based on the total volume of the electrolyte solution 5. In a case where the concentration of the second lithium salt is 1.0 mol/L or less, the viscosity of the electrolyte solution 5 is less likely to increase, thereby ensuring sufficient mobility of ions. From the same viewpoint, the concentration of the second lithium salt may be 0.8 mol/L or less, or 0.5 mol/L or less.

The electrolyte solution 5 may contain the above-mentioned sulfonic acid compound as an additive. In a case where the electrolyte solution 5 contains the sulfonic acid compound, by impregnating the positive electrode 9 and/or the negative electrode 4 (electrode for lithium ion batteries) with the electrolyte solution 5, the sulfonic acid compound can be adhered to the surface of the positive electrode active material layer 7 contained in the positive electrode 9 and/or the surface of the negative electrode active material layer 2 contained in the negative electrode 4. In addition, in a case where the sulfonic acid compound is adhered to the surface of the positive electrode active material layer 7 and/or the surface of the negative electrode active material layer 2, and then the lithium ion battery 1 undergoes charge and discharge, the SEI film is formed on the surface of the positive electrode active material layer 7 and/or the surface of the negative electrode active material layer 2, and the formed SEI film can contain the sulfonic acid compound. The sulfonic acid compound may be adhered only to the surface of either the positive electrode active material layer 7 or the negative electrode active material layer 2, but from the viewpoint of further reducing resistance, the sulfonic acid compound may be adhered to both the surface of the positive electrode active material layer 7 and the surface of the negative electrode active material layer 2.

A concentration of the sulfonic acid compound in the electrolyte solution 5 may be 0.05 mmol/L or more, 0.1 mmol/L or more, or 0.2 mmol/L or more based on the total amount of the electrolyte solution 5. In addition, the concentration of the sulfonic acid compound in the electrolyte solution 5 may be 0.05 mmol/L or more, 0.1 mmol/L or more, or 0.2 mmol/L or more and 1.0 mol/L or less based on the total amount of the electrolyte solution 5.

The electrolyte solution 5 may contain, as an additive, a compound different from the sulfonic acid compound of the Formula (1) and having a sulfonyl group (>S(=O)₂). Examples of the compound having a sulfonyl group include 1,3-propanesultone, 1-propene 1,3-sultone, 1,3,2-dioxathiolane-2,2-dioxide, 1,3,2-dioxathiane-2,2-dioxide, 2-(methanesulfonyl)ethyl methanesulfonate, 2-(methanesulfonyl)ethyl ethanesulfonate, 2-(methanesulfonyl)ethyl vinylsulfonate, 2-(methanesulfonyl)ethyl phenylsulfonate, 3-trifluoromethanesulfonyltetrahydrothiophene-1,1-dioxide, 3-methanesulfonyltetrahydrothiophene-1,1-dioxide, 3-vinylsulfonyltetrahydrothiophene-1,1-dioxide, 3-methallylsulfonyltetrahydrothiophene-1,1-dioxide, benzenesulfonyltetrahydrothiophene-1,1-dioxide, 3-methanesulfonyltetrahydrothiophene-1,1-dioxide-2-ene, 4-methanesulfonyltetrahydrothiophene-1,1-dioxide, 3-methanesulfonyloxytetrahydrothiophene-1,1-dioxide, 3-vinylsulfonyloxytetrahydrothiophene-1,1-dioxide, 3-methallylsulfonyloxytetrahydrothiophene-1,1-dioxide, benzenesulfonyloxytetrahydrothiophene-1,1-dioxide, 3-methanesulfonyloxytetrahydrothiophene-1,1-dioxide-2-ene, 4-methanesulfonyloxytetrahydrothiophene-1,1-dioxide, and methylene methanedisulfonate. These compounds may be used alone or in combination with two or more thereof. In a case where the electrolyte solution 5 contains the compound having a sulfonyl group, when the lithium ion battery 1 is charged and discharged, as a result of the electrochemical reaction on the surface of the positive electrode active material layer 7 and/or the surface of the negative electrode active material layer 2, the above-mentioned sulfonic acid compound may be generated, which contains a sulfonate anion derived from the compound having a sulfonyl group and a Ni cation. In this case, the SEI film containing the sulfonic acid compound can be formed. The sulfonic acid compound may be adhered only to the surface of either the positive electrode active material layer 7 or the negative electrode active material layer 2, but from the viewpoint of further reducing resistance, the sulfonic acid compound may be adhered to both the surface of the positive electrode active material layer 7 and the surface of the negative electrode active material layer 2.

A concentration of the compound having a sulfonyl group in the electrolyte solution 5 is not particularly limited, but from an economical viewpoint, the concentration may be 0.005% by mass or more, 0.01% by mass or more, or 0.05% by mass or more based on the total mass of the electrolyte solution 5. The concentration of the compound having a sulfonyl group may be 0.005% by mass or more and 10% by mass or less, or 0.005% by mass or more and 5% by mass or less.

The electrolyte solution 5 may contain other additives different from the above-mentioned sulfonic acid compound and the above-mentioned compound having a sulfonyl group. Examples of the other additives include a compound containing a sulfur atom, other than the above-mentioned sulfonic acid compound and the above-mentioned compound having a sulfonyl group, a negative electrode protector, a positive electrode protector, a flame retardant, an overcharge inhibitor, a cyclic carbonate compound, a nitrile compound, an isocyanate compound, a compound having an acetylene-1,2-diyl group (-C=C-), a phosphoric acid ester compound, an acid anhydride, a cyclic phosphazene compound, a compound containing a boron atom, and a compound containing a silicon atom.

Examples of the compound containing a sulfur atom, other than the sulfonic acid compound and the compound having a sulfonyl group, include 1,3,2-dioxathiolane-2-oxide and 1,3,2-dioxathiane-2-oxide.

Examples of the cyclic carbonate compound include 4-fluoro-1,3-dioxolan-2-one (FEC), trans- or cis-4,5-difluoro-1,3-dioxolan-2-one (DFEC), vinylene carbonate (VC), vinyl ethylene carbonate (VEC), and 4-ethynyl-1,3-dioxolan-2-one (EEC). The cyclic carbonate compound may be VC, FEC, VEC, or a combination thereof.

Examples of the nitrile compound include mononitrile compounds such as acetonitrile and propionitrile; and dinitrile compounds such as succinonitrile, glutaronitrile, adiponitrile, pimelonitrile, suberonitrile, and sebaconitrile. The nitrile compound may be succinonitrile, adiponitrile, or a combination thereof.

Examples of the isocyanate compound include methyl isocyanate, ethyl isocyanate, butyl isocyanate, phenyl isocyanate, tetramethylene diisocyanate, hexamethylene diisocyanate, octamethylene diisocyanate, 1,4-phenylene diisocyanate, 2-isocyanatoethyl acrylate, and 2-isocyanatoethyl methacrylate.

Examples of the compound having an acetylene-1,2-diyl group (-C=C-) include 2-propynyl methyl carbonate, 2-propynyl acetate, 2-propynyl formate, 2-propynyl methacrylate, di(2-propynyl) oxalate, methyl-2-propynyl oxalate, ethyl-2-propynyl oxalate, di(2-propynyl) glutarate, and 2-butyne-1,4-diyl diformate.

Examples of the phosphoric acid ester compound include trimethyl phosphate, tributyl phosphate, trioctyl phosphate, tris(2,2,2-trifluoroethyl) phosphate, bis(2,2,2-trifluoroethyl)methyl phosphate, bis(2,2,2-trifluoroethyl)ethyl phosphate, bis(2,2,2-trifluoroethyl) 2,2-difluoroethyl phosphate, bis(2,2,2-trifluoroethyl) 2,2,3,3-tetrafluoropropyl phosphate, bis(2,2-difluoroethyl) 2,2,2-trifluoroethyl phosphate, bis(2,2,3,3-tetrafluoropropyl) 2,2,2-trifluoroethyl phosphate, (2,2,2-trifluoroethyl)(2,2,3,3-tetrafluoropropyl)methyl phosphate, tris(1,1,1,3,3,3-hexafluoropropan-2-yl) phosphate, methyl methylene bisphosphonate, ethyl methylene bisphosphonate, methyl ethylene bisphosphonate, ethyl ethylene bisphosphonate, methyl butylene bisphosphonate, ethyl butylene bisphosphonate, methyl 2-(dimethylphosphoryl)acetate, ethyl 2-(dimethylphosphoryl)acetate, methyl 2-(diethylphosphoryl)acetate, ethyl 2-(diethylphosphoryl)acetate, 2-propynyl 2-(dimethylphosphoryl)acetate, 2-propynyl 2-(diethylphosphoryl)acetate, methyl 2-(dimethoxyphosphoryl)acetate, ethyl 2-(dimethoxyphosphoryl)acetate, methyl 2-(diethoxyphosphoryl)acetate, ethyl 2-(diethoxyphosphoryl)acetate, 2-propynyl 2-(dimethoxyphosphoryl)acetate, 2-propynyl 2-(diethoxyphosphoryl)acetate, methyl pyrophosphate, and ethyl pyrophosphate.

Examples of the acid anhydride include acetic acid anhydride, propionic acid anhydride, succinic acid anhydride, maleic acid anhydride, 3-allyl succinic acid anhydride, glutaric acid anhydride, and itaconic acid anhydride.

Examples of the cyclic phosphazene compound include methoxypentafluorocyclotriphosphazene, ethoxypentafluorocyclotriphosphazene, phenoxypentafluorocyclotriphosphazene, and ethoxyheptafluorocyclotetraphosphazene.

Examples of the compound containing a boron atom include boroxine, trimethylboroxine, trimethoxyboroxine, triethylboroxine, triethoxyboroxine, triisopropylboroxine, triisopropoxyboroxine, tri-n-propylboroxine, tri-n-propoxyboroxine, tri-n-butylboroxine, tri-n-butyloxyboroxine, triphenylboroxine, triphenoxyboroxine, tricyclohexylboroxine, and tricyclohexoxyboroxine.

Examples of the compound containing a silicon atom include hexamethylcyclotrisiloxane, hexaethylcyclotrisiloxane, hexaphenylcyclotrisiloxane, 1,3,5-trimethyl-1,3,5-trivinylcyclotrisiloxane, octamethylcyclotetrasiloxane, decamethylcyclopentasiloxane, trimethylfluorosilane, triethylfluorosilane, tripropylfluorosilane, phenyldimethylfluorosilane, triphenylfluorosilane, vinyldimethylfluorosilane, vinyldiethylfluorosilane, vinyldiphenylfluorosilane, trimethoxyfluorosilane, triethoxyfluorosilane, dimethyldifluorosilane, diethyldifluorosilane, divinyldifluorosilane, ethylvinyldifluorosilane, methyltrifluorosilane, ethyltrifluorosilane, hexamethyldisiloxane, 1,3-diethyltetramethyldisiloxane, hexaethyldisiloxane, octamethyltrisiloxane, methoxytrimethylsilane, ethoxytrimethylsilane, dimethoxydimethylsilane, trimethoxymethylsilane, tetramethoxysilane, bis(trimethylsilyl) peroxide, trimethylsilyl acetate, triethylsilyl acetate, trimethylsilyl propionate, trimethylsilyl methacrylate, trimethylsilyl trifluoroacetate, tris(trimethylsiloxy)boron, tris(trimethylsilyl)phosphate, and tris(trimethylsilyl)phosphite.

The separator 6 may be, for example, a porous film or a nonwoven fabric. The separator 6 may contain a resin selected from polyethylene, polypropylene, fluororesin, and the like, and may also contain a polymer electrolyte. The separator 6 may be a single layer, or may have multiple layers.

Specific forms, such as shape and thickness, of each member constituting the lithium ion battery can be set as appropriate by those skilled in the art. The configuration of the lithium ion battery is not limited to the embodiment shown in Fig. 2, and can be appropriately modified.

### Examples

Hereinafter, the present invention will be described in more detail with reference to examples. However, the present invention is not limited to these examples.

### 1. Test 1

### 1-1. Production of lithium ion battery

### <Example 1-1>

### Production of battery element

A positive electrode sheet (manufactured by Hachiyama Co., Ltd.) containing a lithium-containing composite oxide and a negative electrode sheet (manufactured by Hachiyama Co., Ltd.) containing graphite were prepared. The positive electrode sheet contained an aluminum foil (thickness: 20 µm) as a positive electrode current collector, and positive electrode active material layers formed on both surfaces of the aluminum foil. The positive electrode active material layer contained a lithium-containing composite oxide (LiNi_{0.5}Co_{0.2}Mn_{0.3}O₂) as a positive electrode active material, carbon black (CB) and carbon (KS) as conductive additives, and polyvinylidene fluoride (PVDF) as a binder. A mass ratio of these components was lithium-containing composite oxide:CB:KS:PVDF = 92:2.5:2.5:3. The negative electrode sheet had a copper foil (thickness: 10 µm) as a negative electrode current collector, and a negative electrode active material layer formed on one surface of the copper foil. The negative electrode active material layer contained graphite (Gr) as a negative electrode active material, and sodium carboxymethyl cellulose (CMC) and styrene-butadiene rubber (SBR) as binders. A mass ratio of these components was Gr:CMC:SBR = 98:1:1. The negative electrode sheet and the positive electrode sheet were alternately stacked with a separator made of propylene interposed therebetween, producing a battery element containing, as electrodes, a total of 13 layers with 7 layers of the negative electrode sheets and 6 layers of the positive electrode sheets.

### Production of non-aqueous electrolyte solution

LiPF₆ as an electrolyte was dissolved in a mixed non-aqueous solvent (manufactured by Kishida Chemical Co., Ltd.) containing ethylene carbonate (EC) and diethyl carbonate (EMC) in a volume compositional ratio of EC:EMC = 30:70, thereby obtaining a LiPF₆ solution having a concentration of 1 mol/L. Nickel(II) trifluoromethanesulfonate (manufactured by Tokyo Chemical Industry Co., Ltd.) was added to the LiPF₆ solution to produce a non-aqueous electrolyte solution. A concentration of the nickel(II) trifluoromethanesulfonate was 0.4 mmol/L based on the total amount of the non-aqueous electrolyte solution.

### Production of lithium ion battery

The battery element produced by the above-mentioned method was inserted into a bag formed of a laminate film having aluminum (thickness: 40 µm) and a resin layer covering both surfaces of the aluminum, such that ends of the positive electrode sheet and the negative electrode sheet protruded from the bag. Furthermore, the non-aqueous electrolyte solution produced by the above-mentioned method was added to the bag, and the bag was allowed to stand at room temperature (27°C) for 5 hours to impregnate the electrodes with the non-aqueous electrolyte solution, thereby obtaining a lithium ion battery which contained electrodes (the positive electrode sheet and the negative electrode sheet) containing the positive electrode active material layer or the negative electrode active material layer, to which the nickel(II) trifluoromethanesulfonate was adhered.

### <Example 1-2>

A lithium ion battery was obtained in the same manner as in Example 1-1, except that, in the production of the non-aqueous electrolyte solution, nickel(II) benzenesulfonate (manufactured by Tokyo Chemical Industry Co., Ltd.) was added instead of the nickel(II) trifluoromethanesulfonate, such that the concentration thereof was set to 0.14 mmol/L based on the total amount of the non-aqueous electrolyte solution.

### <Comparative Example 1-1>

A non-aqueous electrolyte solution was produced and a lithium ion battery was obtained in the same manner as in Example 1-1, except that, in the production of the non-aqueous electrolyte solution, the nickel(II) trifluoromethanesulfonate was not added.

### <Comparative Example 1-2>

A lithium ion battery was obtained in the same manner as in Example 1-1, except that, in the production of the non-aqueous electrolyte solution, lithium trifluoromethanesulfonate (manufactured by Aldrich) was added instead of the nickel(II) trifluoromethanesulfonate, such that the concentration thereof was set to 0.4 mmol/L based on the total amount of the non-aqueous electrolyte solution.

### <Comparative Example 1-3>

A lithium ion battery was obtained in the same manner as in Comparative Example 1-2, except that the concentration of the lithium trifluoromethanesulfonate in the non-aqueous electrolyte solution was set to 0.14 mmol/L based on the total amount of the non-aqueous electrolyte solution.

### 1-2. Evaluation

The lithium ion batteries obtained in Examples 1-1 and 1-2 and Comparative Examples 1-1 to 1-3 were charged at 25°C with a current corresponding to 0.1 C for 1 hour, and then held at 25°C for 10 hours. Thereafter, charging was performed for 5 hours with a current corresponding to 0.1 C, and then held at 45°C for 24 hours. Next, the battery was discharged to 3 V with a current corresponding to 0.1 C at 25°C, and then degassed. Subsequently, the battery was aged and stabilized by sequentially performing the following operations: charging to 4.2 V at a current corresponding to 0.2 C and discharging to 3 V at a current corresponding to 0.2 C for 3 cycles; charging to 4.2 V at a current corresponding to 0.5 C and discharging to 3.0 V at a current corresponding to 0.5 C for 3 cycles; and charging to 4.2 V at a current corresponding to 1 C and discharging to 3.0 V at a current corresponding to 1 C for 3 cycles. Thereafter, charging and discharging in an initial stage were performed at a current corresponding to 2.0 C. The discharge capacity observed during the charging and discharging in the initial stage was referred to as "initial capacity".

### (Measurement of initial DCR)

After the charging and discharging in the initial stage, the lithium ion battery was charged to 50% of its initial capacity and then discharged with a current corresponding to 0.2 C at -10°C, and a change in battery voltage was observed. Thereafter, while incorporating a 10-minute rest period, the change in voltage was recorded during repeated charging and discharging, varying the discharge current (discharge rate) to 0.5 C, 1.0 C, and 2.0 C. ADCR (Ω) was calculated from these values and referred to as "initial DCR (Ω)". The DCR is a value corresponding to a resistance value of the battery, and it can be said that, as the DCR value is lower, output characteristics of the battery is higher.

### (Measurement of post-cycle DCR and discharge capacity maintenance rate)

Subsequently, for each of the lithium ion batteries of Examples and Comparative Examples, in which the initial DCR had been measured, a charge/discharge cycle test was performed in which a charge/discharge cycle was repeated 400 times under a condition of 45°C, with a charging rate of 2 C, a discharging rate of 2 C, a charging termination voltage of 4.2 V, and a discharging termination voltage of 3.0 V. The discharge capacity after the 400 cycles was referred to as "post-cycle capacity".

Furthermore, after the charge/discharge cycle test, the DCR was measured by the same method as mentioned in (Measurement of initial DCR) above, in which charging to 50% of the post-cycle capacity and discharging were repeated, and a value thereof is referred to as "post-cycle DCR (Ω)".

Table 1 shows the initial DCR, the post-cycle DCR, and the discharge capacity maintenance rate of each of the lithium ion batteries of Examples and Comparative Examples. The "discharge capacity maintenance rate" in Table 1 is a value obtained by the following formula. "Discharge capacity maintenance rate" = {(Post-cycle capacity)/(Initial capacity)} × 100

**[Table 1]**

| | Initial DCR (Ω) | Post-cycle DCR (Ω) | Discharge capacity maintenance rate (%) |
|---|---|---|---|
| Example 1-1 | 0.48 | 1.07 | 83 |
| Example 1-2 | 0.49 | 1.19 | 80 |
| Comparative Example 1-1 | 0.49 | 1.23 | 74 |
| Comparative Example 1-2 | 0.50 | - | 75 |
| Comparative Example 1-3 | 0.48 | - | 65 |

As shown in Table 1, in Example 1-1 and Example 1-2, in which the electrode containing the compound which contained the sulfonate anion represented by the Formula (1) and the Ni cation was used, a high capacity was maintained in the high-temperature cycle test of the lithium ion battery. In addition, it was found that the increase in resistance value after the high-temperature cycle test was suppressed compared to Comparative Example 1-1.

### 2. Test 2

### 2-1. Production of lithium ion battery

### <Example 2-1>

### Production of coin cell

A positive electrode sheet (manufactured by Hachiyama Co., Ltd.) containing a lithium-containing composite oxide and a negative electrode sheet (manufactured by Hachiyama Co., Ltd.) containing graphite were prepared. The positive electrode sheet contained an aluminum foil (thickness: 20 µm) as a positive electrode current collector, and a positive electrode active material layer formed on both surfaces of the aluminum foil. The positive electrode active material layer contained a lithium-containing composite oxide (LiNi_{0.5}Co_{0.2}Mn_{0.3}O₂) as a positive electrode active material, carbon black (CB) and carbon (KS) as conductive additives, and polyvinylidene fluoride (PVDF) as a binder. A mass ratio of these components was lithium-containing composite oxide:CB:KS:PVDF = 92:2.5:2.5:3. The negative electrode sheet had a copper foil (thickness: 10 µm) as a negative electrode current collector, and a negative electrode active material layer formed on one surface of the copper foil. The negative electrode active material layer contained graphite as a negative electrode active material, and carboxymethyl cellulose and styrene-butadiene rubber as binders. A mass ratio of these components was graphite:carboxymethyl cellulose: styrene butadiene rubber = 98:1:1. A coin cell (CR2032) was produced using the above-mentioned positive electrode sheet and negative electrode sheet with a glass filter ("GA-100" manufactured by ADVANTEC Co., Ltd.) as a separator.

### Production of non-aqueous electrolyte solution

A non-aqueous electrolyte solution was produced in the same manner as in Example 1-1 mentioned above, except that the concentration of nickel(II) trifluoromethanesulfonate in the non-aqueous electrolyte solution was set to 700 ppm (2.16 mmol/L) based on the total amount of the non-aqueous electrolyte solution.

### Production of lithium ion battery

The produced non-aqueous electrolyte solution was injected into the coin cell produced by the above-mentioned method, and the coin cell was allowed to stand at room temperature (27°C) for 5 hours to impregnate the electrodes with the non-aqueous electrolyte solution, thereby obtaining a lithium ion battery which contained electrodes (the positive electrode sheet and the negative electrode sheet) containing the positive electrode active material layer or the negative electrode active material layer, to which the nickel(II) trifluoromethanesulfonate was adhered.

### <Comparative Example 2-1>

A non-aqueous electrolyte solution was produced and a lithium ion battery was obtained in the same manner as in Example 2-1, except that, in the production of the non-aqueous electrolyte solution, the nickel(II) trifluoromethanesulfonate was not added.

### <Reference Example 2-1>

A lithium ion battery was obtained in the same manner as in Example 2-1, except that the positive electrode sheet was changed to a positive electrode sheet (manufactured by Hachiyama Co., Ltd.) containing LiFePO₄.

### <Reference Example 2-2>

A non-aqueous electrolyte solution was produced and a lithium ion battery was obtained in the same manner as in Reference Example 2-1, except that, in the production of the non-aqueous electrolyte solution, the nickel(II) trifluoromethanesulfonate was not added.

### 2-2. Evaluation

### (Measurement of discharge capacity maintenance rate)

The lithium ion batteries obtained in Example 2-1, Comparative Example 2-1, and Reference Examples 2-1 and 2-2 were subjected to charging to 4.2 V at a current corresponding to 0.2 C, and then discharging to 3 V at a current corresponding to 0.2 C at 25°C for 2 cycles. Subsequently, a charge/discharge cycle test was performed in which a charge/discharge cycle was repeated 400 times under a condition of 25°C, with a charging rate of 2 C, a discharging rate of 2 C, a charging termination voltage of 4.2 V, and a discharging termination voltage of 3.0 V. However, for Reference Examples 2-1 and 2-2, the charging termination voltage was set to 3.7 V. In the charge/discharge cycle test, the discharge capacity observed during the first charging and discharging was referred to as "initial capacity", the discharge capacity after the 400 cycles was referred to as "post-cycle capacity", and the "discharge capacity maintenance rate" was obtained by the following formula. The results are shown in Table 2. "Discharge capacity maintenance rate" = {(Post-cycle capacity)/(Initial capacity)} × 100

**[Table 2]**

| | Positive electrode active material | Nickel trifluoromethanesulfonate | Discharge capacity maintenance rate (%) |
|---|---|---|---|
| Example 2-1 | LiNi_{0.5}Co_{0.2}Mn_{0.3}O₂ | Y | 81.2 |
| Comparative Example 2-1 | LiNi_{0.5}Co_{0.2}Mn_{0.3}O₂ | N | 79.7 |
| Reference Example 2-1 | LiFePO₄ | Y | 44.8 |
| Reference Example 2-2 | LiFePO₄ | N | 50.4 |

As shown in Table 2, when LiNi_{0.5}Co_{0.2}Mn_{0.3}O₂ was used as the positive electrode active material, in a case where the positive electrode and the negative electrode contained the nickel(II) trifluoromethanesulfonate (Example 2-1), as compared to case where the nickel(II) trifluoromethanesulfonate was not contained (Comparative Example 2-1), the discharge capacity maintenance rate in the cycle test was high, and high capacity was maintained even after undergoing rigorous test of numerous charge and discharge cycles. On the other hand, when LiFePO₄ was used as the positive electrode active material, the discharge capacity maintenance rate in the cycle test was lower in a case where the positive electrode and the negative electrode contained the nickel(II) trifluoromethanesulfonate (Reference Example 2-1), compared to a case where the nickel(II) trifluoromethanesulfonate was not contained (Reference Example 2-2), and the opposite tendency to that in Example 2-1 and Comparative Example 2-1 was found.

### 3. Test 3

### 3-1. Production of lithium ion battery

### <Example 3-1>

### Production of coin cell

A positive electrode sheet (manufactured by Hachiyama Co., Ltd.) containing a lithium-containing composite oxide and a negative electrode sheet (manufactured by Hachiyama Co., Ltd.) containing graphite were prepared. The positive electrode sheet had an aluminum foil (thickness: 20 µm) as a positive electrode current collector, and a positive electrode active material layer formed on one surface of the aluminum foil. The positive electrode active material layer contained a lithium-containing composite oxide (LiNi_{0.5}Co_{0.2}Mn_{0.3}O₂) as a positive electrode active material, carbon black (CB) and carbon (KS) as conductive additives, and polyvinylidene fluoride (PVDF) as a binder. A mass ratio of these components was lithium-containing composite oxide:CB:KS:PVDF = 92:2.5:2.5:3. The negative electrode sheet had a copper foil (thickness: 10 µm) as a negative electrode current collector, and a negative electrode active material layer formed on one surface of the copper foil. The negative electrode active material layer contained graphite as a negative electrode active material, and carboxymethyl cellulose and styrene-butadiene rubber as binders. A mass ratio of these components was graphite: carboxymethyl cellulose:styrene butadiene rubber = 98:1:1. A coin cell (CR2032) was produced using the above-mentioned positive electrode sheet and negative electrode sheet with a glass filter ("GA-100" manufactured by ADVANTEC Co., Ltd.) as a separator.

### Production of non-aqueous electrolyte solution

A non-aqueous electrolyte solution was produced in the same manner as in Example 1-1 mentioned above, except that the concentration of nickel(II) trifluoromethanesulfonate in the non-aqueous electrolyte solution was set to 700 ppm (2.16 mmol/L) based on the total amount of the non-aqueous electrolyte solution.

### Production of lithium ion battery

The produced non-aqueous electrolyte solution was injected into the coin cell produced by the above-mentioned method, and the coin cell was allowed to stand at room temperature (27°C) for 5 hours to impregnate the electrodes with the non-aqueous electrolyte solution, thereby obtaining a lithium ion battery which contained electrodes (the positive electrode sheet and the negative electrode sheet) containing the positive electrode active material layer or the negative electrode active material layer, to which the nickel(II) trifluoromethanesulfonate was adhered.

### <Comparative Example 3-1>

A non-aqueous electrolyte solution was produced and a lithium ion battery was obtained in the same manner as in Example 3-1, except that, in the production of the non-aqueous electrolyte solution, the nickel(II) trifluoromethanesulfonate was not added.

### <Reference Example 3-1>

A lithium ion battery was obtained in the same manner as in Example 3-1, except that the positive electrode sheet was changed to a positive electrode sheet (manufactured by Hachiyama Co., Ltd.) containing LiFePO₄.

### <Reference Example 3-2>

A non-aqueous electrolyte solution was produced and a lithium ion battery was obtained in the same manner as in Reference Example 3-2, except that, in the production of the non-aqueous electrolyte solution, the nickel(II) trifluoromethanesulfonate was not added.

### 3-2. Evaluation

### (Measurement of discharge capacity maintenance rate)

The lithium ion batteries obtained in Example 3-1, Comparative Example 3-1, and Reference Examples 3-1 and 3-2 were subjected to charging to 4.2 V at a current corresponding to 0.2 C, and then discharging to 3 V at a current corresponding to 0.2 C at 25°C for 2 cycles. Subsequently, a charge/discharge cycle test was performed in which a charge/discharge cycle was repeated 100 times under a condition of 45°C, with a charging rate of 2 C, a discharging rate of 2 C, a charging termination voltage of 4.2 V, and a discharging termination voltage of 3.0 V. However, for Reference Examples 3-1 and 3-2, the charging termination voltage was set to 3.7 V. In the charge/discharge cycle test, the discharge capacity observed during the first charging and discharging was referred to as "initial capacity", the discharge capacity after the 100 cycles was referred to as "post-cycle capacity", and the "discharge capacity maintenance rate" was obtained by the following formula. The results are shown in Table 3. "Discharge capacity maintenance rate" = {(Post-cycle capacity)/(Initial capacity)} × 100

**[Table 3]**

| | Positive electrode active material | Nickel trifluoromethanesulfonate | Discharge capacity maintenance rate (%) |
|---|---|---|---|
| Example 3-1 | LiNi_{0.5}Co_{0.2}Mn_{0.3}O₂ | Y | 97 |
| Comparative Example 3-1 | LiNi_{0.5}Co_{0.2}Mn_{0.3}O₂ | N | 96 |
| Reference Example 3-1 | LiFePO₄ | Y | 45 |
| Reference Example 3-2 | LiFePO₄ | N | 62 |

As shown in Table 3, when LiNi_{0.5}Co_{0.2}Mn_{0.3}O₂ was used as the positive electrode active material, in a case where the positive electrode and the negative electrode contained the nickel(II) trifluoromethanesulfonate (Example 3-1), as compared to case where the nickel(II) trifluoromethanesulfonate was not contained (Comparative Example 3-2), it was found that the discharge capacity maintenance rate in the cycle test was high, and high capacity was maintained even after undergoing rigorous cycle test at a high temperature. On the other hand, when LiFePO₄ was used as the positive electrode active material, the discharge capacity maintenance rate in the cycle test was lower in a case where the positive electrode and the negative electrode contained the nickel(II) trifluoromethanesulfonate (Reference Example 3-1), compared to a case where the nickel(II) trifluoromethanesulfonate was not contained (Reference Example 3-2), and the opposite tendency to that in Example 3-1 and Comparative Example 3-1 was found. In the present test 3, the difference in discharge capacity maintenance rate between Example 3-1 and Comparative Example 3-1 was 1%, which was slightly smaller than the difference in discharge capacity maintenance rate between Example 1-1 and Comparative Example 1-1 in the test 1 mentioned above. This is due to the fact that the number of charge and discharge cycles in the present test 3 was 100 cycles, which was relatively low.

### Reference Signs List

10: Electrode for lithium ion batteries
11: Current collector
12: Active material layer
1: Lithium ion battery
2: Negative electrode active material layer
3: Negative electrode current collector
4: Negative electrode
5: Electrolyte solution
6: Separator
7: Positive electrode active material layer
8: Positive electrode current collector
9: Positive electrode

## Claims

1. An electrode for lithium ion batteries, comprising:
a sulfonic acid compound comprising a sulfonate anion represented by the following Formula (1) and a Ni cation,
R-SO₃⁻ (1),
in the Formula (1), R represents an alkyl group having 1 to 5 carbon atoms, which may be substituted with a fluorine atom, an alkenyl group having 2 to 5 carbon atoms, which may be substituted with a fluorine atom, an alkynyl group having 2 to 5 carbon atoms, which may be substituted with a fluorine atom, or an aryl group which may be substituted with a fluorine atom,
wherein the electrode comprises a positive electrode active material layer, and the positive electrode active material layer comprises, as a positive electrode active material, Li_{z}Ni_{(1-x-y)}CoₓM_{y}O₂, and wherein 0 ≤ x ≤ 0.40, 0 ≤ y ≤ 0.40, 0.90 ≤ z ≤ 1.20, and M is at least one element selected from the group consisting of Mn, V, Mg, Mo, Nb, and Al.

2. An electrode for lithium ion batteries, comprising:
a sulfonic acid compound comprising a sulfonate anion represented by the following Formula (1) and a Ni cation,
R-SO₃⁻ (1),
in the Formula (1), R represents an alkyl group having 1 to 5 carbon atoms, which may be substituted with a fluorine atom, an alkenyl group having 2 to 5 carbon atoms, which may be substituted with a fluorine atom, an alkynyl group having 2 to 5 carbon atoms, which may be substituted with a fluorine atom, or an aryl group which may be substituted with a fluorine atom,
wherein the electrode is used as a negative electrode of a lithium ion battery which comprises a positive electrode and the negative electrode arranged opposite to each other, and an electrolyte solution, and
the positive electrode comprises a positive electrode active material layer, and the positive electrode active material layer comprises, as a positive electrode active material, Li_{z}Ni_{(1-x-y)}CoₓM_{y}O₂, and wherein 0 ≤ x ≤ 0.40, 0 ≤ y ≤ 0.40, 0.90 ≤ z ≤ 1.20, and M is at least one element selected from the group consisting of Mn, V, Mg, Mo, Nb, and Al.

3. The electrode for lithium ion batteries according to Claim 1 or 2,
wherein the sulfonic acid compound is a compound represented by the following Formula (2),
(R-SO₃⁻)₂[Ni]²⁺ (2),
in the Formula (2), R represents an alkyl group having 1 to 5 carbon atoms, which may be substituted with a fluorine atom, an alkenyl group having 2 to 5 carbon atoms, which may be substituted with a fluorine atom, an alkynyl group having 2 to 5 carbon atoms, which may be substituted with a fluorine atom, or an aryl group which may be substituted with a fluorine atom.

4. The electrode for lithium ion batteries according to any one of Claims 1 to 3,
wherein R is an alkyl group having 1 to 5 carbon atoms, which may be substituted with a fluorine atom.

5. A lithium ion battery comprising:
a positive electrode and a negative electrode arranged opposite to each other, and
an electrolyte solution,
wherein at least one of the positive electrode or the negative electrode comprises a sulfonic acid compound comprising a sulfonate anion represented by the following Formula (1) and a Ni cation, and
the positive electrode comprises a positive electrode active material layer, and the positive electrode active material layer comprises, as a positive electrode active material, Li_{z}Ni(_{1-x-y})CoₓM_{y}O₂, and wherein 0 ≤ x ≤ 0.40, 0 ≤ y ≤ 0.40, 0.90 ≤ z ≤ 1.20, and M is at least one element selected from the group consisting of Mn, V, Mg, Mo, Nb, and Al,
R-SO₃⁻ (1),
in the Formula (1), R represents an alkyl group having 1 to 5 carbon atoms, which may be substituted with a fluorine atom, an alkenyl group having 2 to 5 carbon atoms, which may be substituted with a fluorine atom, an alkynyl group having 2 to 5 carbon atoms, which may be substituted with a fluorine atom, or an aryl group which may be substituted with a fluorine atom.

6. The lithium ion battery according to Claim 5,
wherein the sulfonic acid compound is a compound represented by the following Formula (2),
(R-SO₃⁻)₂[Ni]²⁺ (2),
in the Formula (2), R represents an alkyl group having 1 to 5 carbon atoms, which may be substituted with a fluorine atom, an alkenyl group having 2 to 5 carbon atoms, which may be substituted with a fluorine atom, an alkynyl group having 2 to 5 carbon atoms, which may be substituted with a fluorine atom, or an aryl group which may be substituted with a fluorine atom.
